# EUROPEAN PATENT APPLICATION

(11) **EP 3 508 879 A1**
(43) Date of publication of application: **10.07.2019**
(21) Application number: 17845156.3
(22) Date of filing: 07.08.2017
(51) Int. Cl.: G01S 15/93, G01S 15/08, B60R 16/023

(54) **DETECTION DEVICE AND DETECTION METHOD OF ULTRASONIC BLIND AREA OF VEHICLE FOR PREVENTING GROUND MISMEASUREMENT AND MISINFORMATION**

(30) Priority: 30.08.2016 CN 201610759685
(71) Applicant: Chen, Wuqiang, Xiamen, Fujian 361100 (CN)
(72) Inventor: Chen, Wuqiang, Xiamen, Fujian 361100 (CN)
(74) Representative: Glück Kritzenberger Patentanwälte PartGmbB
(86) International application number: PCT/CN2017/096210
(87) International publication number: WO 2018/040854

(57) **Abstract**

Disclosed are an automobile ultrasonic blind area detection device and detection method for preventing ground misdetection and misinformation. The detection device comprises a plurality of ultrasonic sensors, each ultrasonic sensor is arranged to form a certain angle with the longitudinal center line of an automobile, the detection directions of the ultrasonic sensors are spaced by set angles to respectively correspond to different directions from the far end to the near end of a side lane blind area; the detection distances of the ultrasonic sensors are different, and decrease gradually from the far end to the near end of the side lane blind area; ground misdetection signals of the ultrasonic sensors are shielded, and useful signals detected by the ultrasonic sensors are extracted and combined into far-near continuous long-distance detection signals to cover an automobile side lane exterior mirror blind area and a visible area behind the blind area more widely. The detection device and the detection method can cover the automobile side lane exterior mirror blind area and the visible area behind the blind area more widely, and effectively ensure the detection performance of a blind spot monitoring system.

## Description

### Field of the Invention

The present invention belongs to the field of automobile electronic equipment, and particularly, relates to an automobile ultrasonic blind area detection device and detection method for preventing ground misdetection and misinformation.

### Background of the Invention

The use of ultrasonic sensors in an automobile, e.g., a commonly known as reversing radar in an automobile, i.e., a front and rear parking assist system, is becoming increasingly popular. The surrounding environments in front and back of the automobile are detected via ultrasonic sensors arranged in the front and the back of the automobile to judge objects and clear blind areas through the use of the ultrasonic detection technology and the ultrasonic sensors.

At present, the semi-automatic or automatic parking system (hereinafter collectively referred to as an automatic parking system) additionally applied to the automobile also detects the surrounding environments via ultrasonic sensors, and seeks and recognizes a parking plot via ultrasonic automatic parking sensors. The automobile blind spot monitoring system (or referred to as a blind area monitoring system or a blind spot assist system) applied to part of automobiles at present also adopts the ultrasonic detection technology, and it detects the blind area that cannot be observed from left and right lane exterior mirrors of the automobile via blind spot sensors to assist the driver in his or her changing lanes and driving.

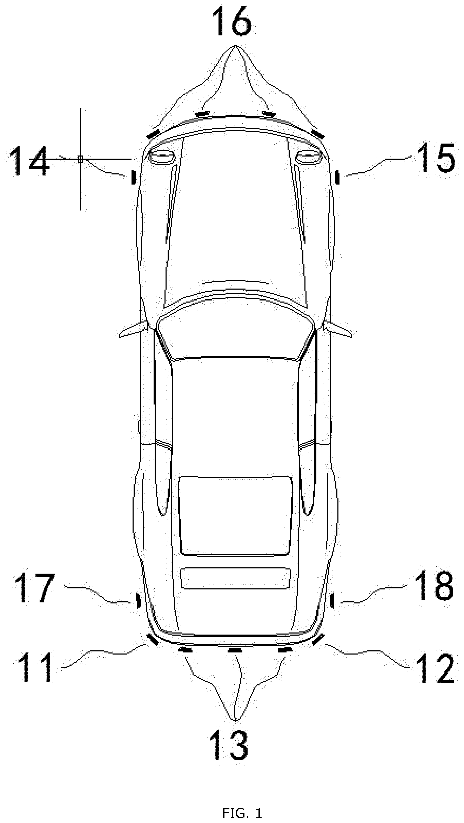

As is shown in Fig. 1, the automobile is provided with parking sensors 16 and 13 (also referred to as reversing radar sensors), which are also referred to as RPA sensors, and respectively arranged at different positions in the front and the back of the automobile, with four or two in the front and four, three or two in the back..

Ultrasonic blind spot sensors 11 and 12 are also referred to as BSA sensors, and are respectively arranged on the left rear part and the right rear part of the automobile with one for each part.

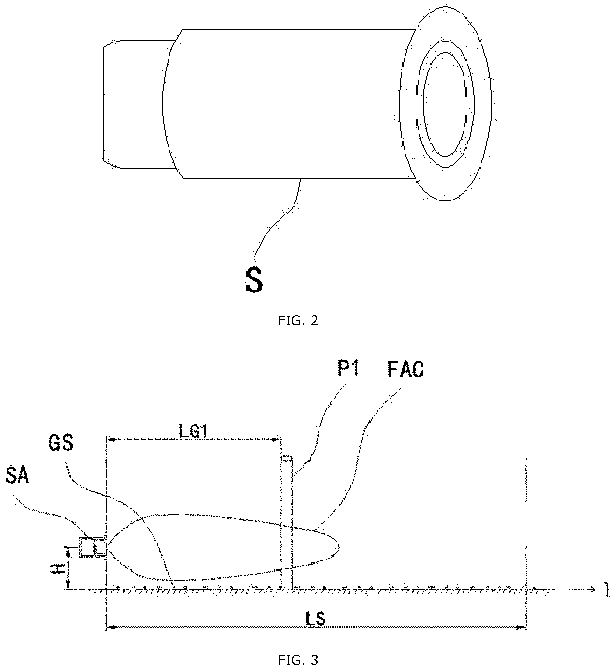

Automatic parking sensors 14, 15, 17 and 18, also referred to as APA sensors, are respectively arranged on the front left side, the front right side, the rear left side and the rear right side of the automobile with one for each side. The APA sensors 14 and 15 also serve as road condition judgment assist sensors of a blind spot monitoring system, and in partial applications, the APA sensors 17 and 18 also serve as blind area assist detection sensors of the blind spot monitoring system to enlarge the coverage area of the blind area of the system. Fig. 2 is an outline view of a traditional ultrasonic sensor.

The ultrasonic sensor applied to the automobile at present is often installed on an automobile bumper, at an installation height of 45-65 centimeters. When the sensor is installed too low, a certain pitching-up angle is set appropriately to avoid misdetection and misinformation on the ground.

When the sensor is used as an RPA sensor, the following situation often occurs: for example, when the installation height of the RPA sensor is 35 to 45 centimeters, the sensor pitches up 10 to 20 degrees. For BSA sensors and APA sensors, generally, the installation height cannot be too low, and the pitching-up angle cannot be too large. If the installation height is too low and the pitching-up angle is too large, the detection capability of the sensor on long-distance obstacles (e.g., vehicles) may decline significantly due to the orientation of the detection angle of the sensor. However, the BSA sensors and the APA sensors are required of a more powerful long-distance detection capability.

When the sensors are used as BSA sensors and APA sensors, the installation heights thereof cannot be too high. Generally, the height of the front end portion of the automobile (car) is less than 1 meter, and the ultrasonic reflection point of the sensors is below of a height of 70 centimeters, so when the sensors are installed too high, it is unfavorable for the detection on the automobile (car). Therefore, the installation heights of the ultrasonic BSA sensors and APA sensors on the automobile are usually 45-65 centimeters, in this interval, when the sensors are installed at relatively low positions, the sensors are often designed to pitch up certain small angles, e.g., 1 to 7 degrees, and the pitching-up angles are not too large.

The principle that an ultrasonic sensor detects an obstacle (object) will be generally described below.

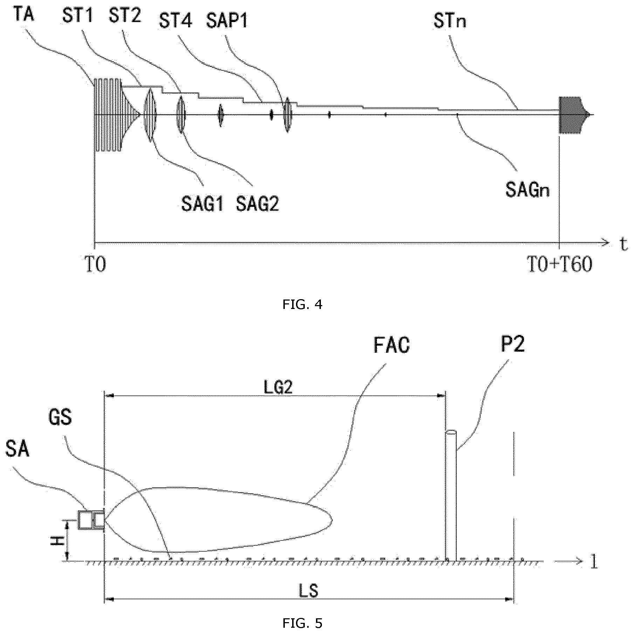

Fig. 3 is a schematic diagram that the traditional sensor SA detects a standard bar, and the outline of the sensor SA is as shown in Fig. 2. The installation height H of the sensor SA is set to be 60 centimeters, and the sensor is installed horizontally and does not pitch up. The range of the sensor SA is LS (set to be 6 meters), and the sensor detects the standard bar PI (a PVC water pipe with a diameter of 75 millimeters short for the standard bar, ISO standard) at the distance LG1 (2.5 meters); the generated working time sequence signals are shown in Fig. 4, and the detection cycle of the sensor SA is T60 (equal to 2^{∗}LS/ (340 m/s), the propagation speed of ultrasonic being usually 340 m/s). TA is a transmitted residual vibration signal of the sensor SA, and SPA1 is an echo signal that the sensor SA detects to the standard bar P1.

Because of the horizontal and vertical detection angle characteristics of the sensor, the larger the vertical detection angle of the sensor is, the more likely the misdetection and misinformation of the ground or ground gravels will be; and the smaller the vertical detection angle of the sensor, the less likely the misdetection and misinformation of the ground or ground gravels will be.

Referring to Fig. 3, according to the requirement of the standard, when the sensor detects an obstacle, it is required not to misdetect or misinform the ground and gravels with the heights of 3-5 centimeters on the ground (the ground gravels are set to GS). The magnitudes of echo signals generated by ultrasonic reflection of GS at different distances away from the sensor are different. Generally, the reflection is the strongest from 70 centimeters to 1 meter away from the sensor, and the generated echo signal SAG1 is the strongest (the amplitude is the highest). With the increase in distance, the strengths of echo signals SAG2...SAGn generated by the GS at different distances decrease gradually. Due to the inherent characteristic of automobile ultrasonic and corresponding industrial requirements, when the sensor normally detects the obstacle, it needs to filter the echo signals generated by the GS to prevent misdetection and misinformation, thereby ensuring effective detection on the obstacle. The common practice is: after the transmission drive of the sensor on a microphone (probe), the sensor begins receiving echoes, a sensor detection circuit detects and judges the echo signals of GS at different time periods (equivalent to different distances away from the sensor), and the detection circuit is set with different thresholds at different time periods (equivalent to different distances away from the sensor) to filter the echo signals of the GS; as is shown in Fig. 4, the first threshold ST1, the second threshold ST2, ..., STn are all higher than the echo signals SAG1, SAG2, ..., SAGn generated by the GS at the corresponding time periods (distances); therefore, the sensor detection circuit does not recognize the echo signal of the GS at each period, but effectively filters the echo signal via a different threshold. Thus, the sensor does not misdetect or misinform the ground gravels GS in the whole course. This is the most common method at present for preventing ground misinformation and misdetection using an ultrasonic sensor.

Meanwhile, in Fig. 3, when the sensor SA detects the standard bar P1 at the distance LG1 (2.5 meters), it can be known from the time sequence signal diagram of Fig. 4 that the strength of the echo signal SAP1 generated by the standard bar P1 is sufficient, exceeding the corresponding threshold ST4, so the sensor detection circuit can recognize the echo signal, and then the sensor SA determines the presence of the standard bar P1 and calculates the distance from the sensor SA to the standard bar P1. In Fig. 3, the curve FAC is an envelope curve of the vertical detection range of the sensor SA. It can be known from the curve that the sensor SA can detect the standard bar P1 within its detection range; and it can also be known that the sensor SA does not misdetect or misinform ground gravels.

To sum up, when the sensor SA detects an object, no matter it is an echo signal of the standard bar P1 or an echo signal of a ground gravel GS, if the sensor detection circuit judges that the echo signal is smaller than the corresponding threshold, the sensor does not make signal output, nor determines the presence of the object; and if the sensor detection circuit judges that the echo signal reaches the corresponding threshold, the sensor makes valid signal output, determines the presence of the object and calculates the distance from the sensor to the object.

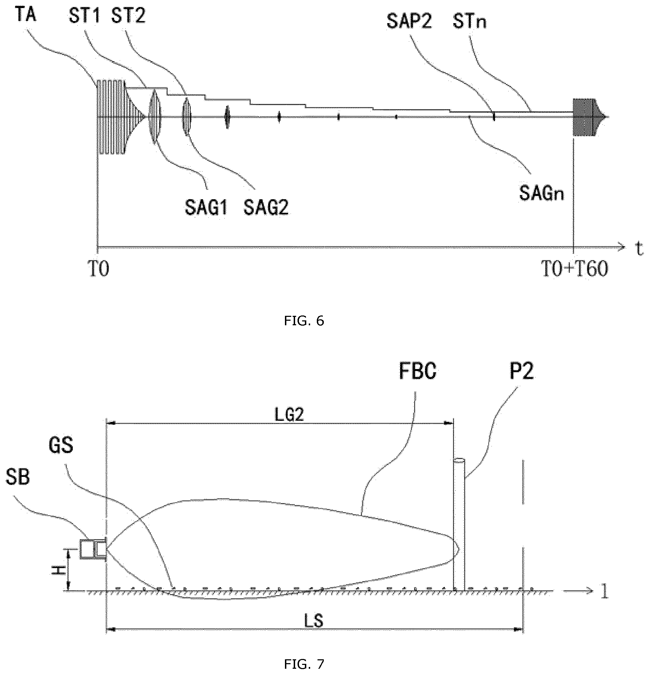

Fig. 5 is a schematic diagram that the sensor SA detects a standard bar P2 at the distance LG2 (5 meters), with the range of the sensor SA still being LS (6 meters). The generated working time sequence signals are shown in Fig. 6, and SAP2 is an echo signal that the sensor SA detects the standard bar P2. It is very obvious to see that for the same sensor, because the distance of the obstacle (standard bar) is doubled (LG2=2^{∗}LG1), the signal strength of the echo signal SAP2 is obviously lower than that of the SAP1. Meanwhile, it can be known from Fig. 6 that the signal strength of the echo signal SAP2 does not reach the corresponding threshold STn, so the sensor SA cannot detect the standard bar P2 at the distance LG2. It can be known from the envelope curve FAC of the vertical detection range of the sensor SA in Fig. 5 that the sensor SA cannot detect the standard bar P2 beyond the detection range thereof.

As is shown in Figs. 3, 4, 5 and 6, based on a preferred microphone (probe) and an optimized electronic circuit and on the premise of preventing ground misdetection and misinformation, the traditional sensor SA can detect the standard bar at the distance of 2.5 meters, but cannot detect the standard bar at the distance of 5 meters. The requirements for the long-distance detection capability and the detection response speed of the ultrasonic RPA sensors, the BSA sensors and the APA sensors applied to the automobile are different due to different functions of the sensors. The long-distance detection capability is one of the most important performance indexes of an ultrasonic sensor, and the long-distance detection capability of the sensor is generally based on the detection of the sensor on a PVC water pipe (standard bar) with the diameter of 75 millimeters, and on the premise of preventing ground misdetection and misinformation. The longer the detection distance of the sensor on the standard bar is, the stronger the long-distance detection capability of the sensor is. The requirement for the long-distance detection capability of an RPA sensor is relatively low, and generally, the range of the RPA sensor is set to be about 2.5 meters, and the sensor is capable of detecting the standard bar at the distance of about 1.8 meters. The BSA sensors are required to detect left and right lane blind areas of automobile exterior mirrors, so the requirement for the long-distance detection capability of the sensors is relatively high, and generally, the ranges of the BSA sensors are set to be 4-6 meters to detect the standard bar at the distance of about 5 meters. The APA sensors are used for detecting and recognizing the environmental state of a parking plot, so the requirement for the long-distance detection capability of the sensors is relatively high, and generally, the ranges of the APA sensors are set to be 4-5 meters to detect the standard bar at the distance of about 3.5 meters. From the above, the traditional sensor SA can be used as an RPA sensor at present, but is hardly used as a BSA sensor or an APA sensor, and is particularly difficult in serving as the BSA sensor.

Therefore, based on the above reasons, the industry is looking for methods to improve the long-distance detection capability of the ultrasonic sensor.

At present, the methods for strengthening the long-distance detection capability of the sensor are as follows:
1. strengthening the power of a microphone (also referred to as a probe) in the single sensor, for example, using a microphone with larger dimension and higher power; for another example, using the microphone with the same dimension and changed specification of an internal piezoelectric ceramic plate to increase the power, then the power of the microphone is increased, the transmitted acoustic wave energy of the microphone is increased,. Therefore, the echo energy reflected by the same obstacle is strengthened, and the sensitivity of the sensor is improved and the detection capability is strengthened;
2. altering the dimensions of the microphone, e.g., the enlargement of the outer diameter or the height or the change in the internal structure of the microphone to strengthen the ultrasonic receiving capability of the microphone, so that the sensitivity is improved with the same transmitting power due to the strengthened echo collection capability of the microphone;
3. improving the electronic circuit while keeping the dimensions of the microphone unchanged to increase the driving power on the microphone and strengthen ultrasonic emission so as to strengthen echo reflection; and the improved electronic circuit improves the signal-to-noise ratio, furthest improves the amplification factor and the like, thereby improving the sensitivity of the sensor; and
4. acting as what is described in an automobile ultrasonic detection method and a sensor with the application number CN201610122775.5, in which a plurality of microphones simultaneously emit ultrasonic to strengthen emission and echo and improve the sensitivity, thereby strengthening the detection capability of the sensor.

The above methods have certain promotion effects of strengthening the sensitivity of the sensor and improving the detection capability of the sensor on a distant object, but all pose a serious problem, that is, when the sensitivity of the sensor is increased and the detection capability on the distant object is strengthened, the sensor can hardly filter the echo signals generated by ground gravels and strengthened with the increase in the sensitivity of the sensor within the vertical detection range of the sensor, and particularly hardly filters the strengthened echo signals generated by the ground gravels near the sensor. This means the sensor has misdetection and misinformation on the ground (ground gravels), which is described in detail below:
The ultrasonic sensor with the improved sensitivity is supposed as an improved sensor SB, whose outline is shown in Fig. 2, and the installation condition and the like are not changed.

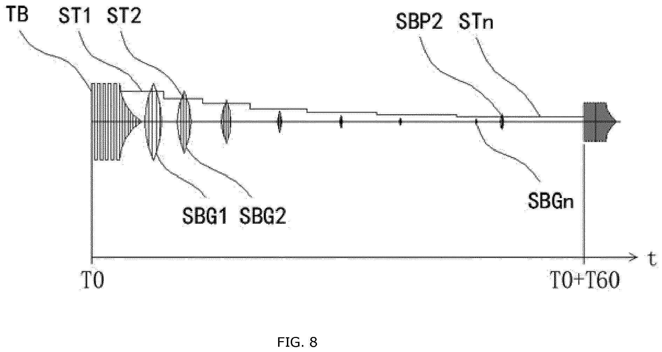

Fig. 7 is a schematic diagram that the sensor SB detects a standard bar P2 at the distance LG2 (5 meters), wherein the range of the sensor SB is LS (6 meters), and the generated working time sequence signals are shown in Fig. 8. SBP2 is an echo signal that the sensor SB detects the standard bar P2, it is thus clear that, the echo signal SBP2 that the improved sensor SB detects the standard bar is obviously strengthened compared with the echo signal SAP2 that the sensor SA detects the standard bar P2 at the same distance LG2. In addition, the signal strength of the echo signal SBP2 exceeds the corresponding threshold STn, so the sensor SB can detect the standard bar P2 at the distance LG2.

It can be seen from the working time sequence signal diagram of Fig.8 that the echo signals SBG1, SBG2...SBGn of GS detected by the sensor SB at different time periods (distances) are also strengthened relative to the echo signals SAG1, SAG2..., SAGn of GS detected by the sensor SA at different time periods (distances), particularly, the echo signals SBG1 and SBG2 of GS at the first and second time periods (short distances) are obviously strengthened over SAG1 and SAG2, and the echo signal SBG1 of GS cannot be filtered even if the first (maximum) threshold ST1 is adjusted to the upper limit (maximum). That is, the sensor SB cannot filter the echo signal generated by the ground gravel GS at the short distance.

In Fig. 7, the curve FBC is an envelope curve of the vertical detection range of the sensor SB. It can be known from the curve that the sensor SB can detect the distant standard bar P2 within the detection range thereof, but produces misdetection and misinformation on the ground (the lower end of the curve FBC is partially intervened and overlapped with the ground).

That is to say, when the improved sensor SB detects a short-distance object, the sensor cannot distinguish a normal obstacle or ground gravel. If the sensor SB detects and alarms the obstacle at the short distance, it also detects and alarms the ground gravel at the short distance, i.e., the sensor SB has ground misdetection and misinformation. That is to say, after the sensitivity of the traditional sensor is greatly improved, although the detection capability of the sensor on the distant object is improved, the detection function at the short distance fails.

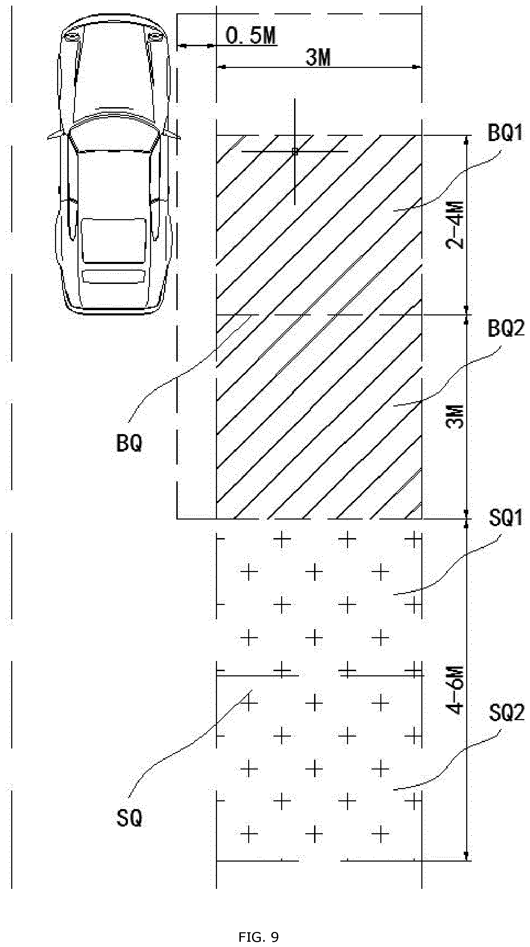

Fig. 9 is a schematic diagram of automobile side lane exterior mirror blind areas (on the right side, which is symmetric to the left side). The automobile ultrasonic blind spot monitoring system adopts an ultrasonic detection technology. At present, the detection range of an ultrasonic blind spot sensor is generally 3-4 meters, and the detection direction faces the lateral rear part of an automobile to cover automobile side lane exterior mirror blind areas BQ (BQ1 and BQ2). In the solution of the present invention, as is shown in Fig. 9, the lane where the vehicle is located is referred to as a current lane, the first lane (adjacent lane) on the right of the vehicle is referred to as a side lane or a side road, and because all figures are embodied on the right side, "right" is omitted in the description.

The solution in the publication number CN102848973A shows a vehicle rear-view mirror blind area detection system and method. For the system, a first ultrasonic sensor 201 installed in the front of the vehicle covers part of the blind area BQ1, and a second ultrasonic sensor 202 or/and other more ultrasonic sensors installed in the back of the vehicle cover part of the blind area BQ1 and the blind area BQ2. This solution does not embody that the visible area SQ behind the blind area BQ2 is detected and covered by an ultrasonic sensor. Therefore, the detection distance of the system is relatively small, and is merely 3 meters behind the rear bumper.

The solution in the publication number CN104442812A shows an automobile lane-changing auxiliary detection device and detection method, in which two ultrasonic sensors installed in the back of an automobile are adopted to detect (cover) blind areas; the detection distance of the first sensor 10 is 3-4 meters ; the angle with the longitudinal center line of the automobile is 70-110 degrees; the detection distance of the second sensor 20 is 4-9 meters and the angle with the longitudinal center line of the automobile is 20-40 degrees; the first sensor 10 covers the blind area BQ1 and the front end of the BQ2, the second sensor 20 equivalently covers the rear end portion of the blind area BQ2 and the front end portion SQ1 of the visible area SQ, equivalently, 2-4 meters ahead of the rear end of the rear bumper of the automobile on the side lane (the distance from the automobile exterior mirror to the rear end of the rear bumper) and 4-6 meters behind the rear end of the rear bumper of the automobile on the side lane are covered. In the solution of CN104442812A, such long detection distances (range) in the front and the back of the side lane reach the coverage limits of the two sensor detection devices in practical application, and the devices cannot cover the visible area SQ2 at the distance of 7-9 meters behind the automobile or the visible area at the longer distance; this is the first problem of the solution of CN104442812A, meanwhile, the detection distance of the second sensor 20 in the solution of CN104442812A is long and reaches 4-6 meters, so in practical application, the second sensor 20 has ground misdetection and misinformation as mentioned in the background, this is the second problem of the solution of CN104442812A; therefore, there is no mature ultrasonic blind spot monitoring system capable of detecting a distance of 4-6 meters on the market at present.

### Summary of the Invention

Aiming at the problems in the prior art, one objective of the present invention is to provide an automobile ultrasonic blind area detection device with an improved structure for preventing ground misdetection and misinformation, and the other objective of the present invention is to provide an automobile ultrasonic blind area detection method for preventing ground misdetection and misinformation for implementing said device.

In order to fulfill the above objectives, the automobile ultrasonic blind area detection device for preventing ground misdetection and misinformation in the present invention, includes a plurality of ultrasonic sensors, wherein each ultrasonic sensor is arranged to form a certain angle with the longitudinal center line of an automobile, and the detection directions of the ultrasonic sensors are spaced by set angles to respectively correspond to different directions of a side lane blind area from the far end to the near end; the detection distances of the ultrasonic sensors are different, and decrease gradually from the far end to the near end of the side lane blind area. Through the shielding of ground misdetection signals of the ultrasonic sensors and the extracting of useful signals detected by the ultrasonic sensors, far-to-near continuous long-distance detection signals are combined to cover an automobile side lane exterior mirror blind area and a visible area behind the blind area more widely.

Further, the angle between the ultrasonic sensor corresponding to the far end and the longitudinal center line of the automobile is relatively small, and the angle between the ultrasonic sensor corresponding to the near end and the longitudinal center line of the automobile is relatively large.

Further, the plurality of ultrasonic sensors are combined into an integral structure or of independently separate structures.

Further, each ultrasonic sensor includes a microphone and an electronic circuit unit, and the electronic circuit unit drives the microphone and amplifies, filters and operates echo signals to obtain a detection distance.

Further, the ultrasonic sensor further includes a housing assembly unit and a gum cover unit installed in the housing assembly unit, and a connector unit is arranged on the housing assembly unit.

Further, the microphone is fixedly arranged in the housing assembly unit via the gum cover unit, the connector unit is an external hardware interface of the sensor, and the sensor transmits signals to the outside via the connector unit.

Further, when the plurality of ultrasonic sensors are combined into an integral structure, the ultrasonic blind area detection device is arranged to be integral with an automobile reflector.

An automobile ultrasonic blind area detection method for preventing ground misdetection and misinformation for implementing said ultrasonic blind area detection device is disclosed, characterized in that the ultrasonic blind area detection method is technically explained as follows: a plurality of ultrasonic sensors are divided into gradually decreasing levels according to the detection distance, wherein the detection directions of the ultrasonic sensors are different; in a side lane blind area, the ground misdetection and misinformation distance generated by one ultrasonic sensor is not greater than the actual detection distance of the next-level ultrasonic sensor; the plurality of ultrasonic sensors work cooperatively, so that the shielding signal of the last-level sensor is replaced by the detection signal of the next-level ultrasonic sensor, and that useful signals detected by all the ultrasonic sensors are finally extracted and combined into far-to-near continuous long-distance detection signals.

Further, the plurality of ultrasonic sensors are divided into gradually decreasing levels from the far end to the near end of the side lane blind area, and the near-end ultrasonic sensor with the lowest level at the nearest end does not produce a ground misdetection and misinformation signal on the ground.

Further, the plurality of ultrasonic sensors are combined into an integral structure or of independently separated structures.

The ultrasonic blind area detection device and detection method of the present invention are applied to an automobile ultrasonic blind spot monitoring system, thereby preventing misdetection and misinformation on the ground, effectively improving the long-distance detection capability of the system, appropriately covering the automobile side lane blind area and the visible area behind the blind area more widely, and effectively ensuring the detection performance of the blind spot monitoring system.

### Brief Description of the Drawings

Fig. 1 is a schematic arrangement diagram of automobile ultrasonic sensors;
Fig. 2 is a structure diagram of a traditional ultrasonic sensor;
Fig. 3 is a schematic diagram that a traditional sensor SA detects a standard bar at the distance LG1;
Fig. 4 is a schematic diagram of working time sequence signals when the traditional sensor SA detects the standard bar at the distance LG1;
Fig. 5 is a schematic diagram that the traditional sensor SA detects a standard bar at the distance LG2;
Fig. 6 is a schematic diagram of working time sequence signals when the traditional sensor SA detects the standard bar at the distance LG2;
Fig. 7 is a schematic diagram that an improved sensor SB detects the standard bar at the distance LG2;
Fig. 8 is a schematic diagram of working time sequence signals when the improved sensor SB detects the standard bar at the distance LG2;
Fig. 9 is a schematic diagram of automobile side lane exterior mirror blind areas;
Fig. 10 is a schematic diagram of original detection of a detection device SZ provided with two ultrasonic sensors on a side lane;
Fig. 11 is a schematic diagram of ground misdetection removing detection of the detection device SZ provided with two ultrasonic sensors on the side lane;
Fig. 12 is a schematic diagram of exploded valid detection of the detection device SZ provided with two ultrasonic sensors on the side lane;
Fig. 13 is a schematic diagram of comprehensive valid detection of the detection device SZ provided with two ultrasonic sensors on the side lane;
Fig. 14 is a schematic diagram of original detection of a detection device SZ provided with three ultrasonic sensors on a side lane;
Fig. 15 is a schematic diagram of ground misdetection removing detection of the detection device SZ provided with three ultrasonic sensors on the side lane;
Fig. 16 is a schematic diagram of exploded valid detection of the detection device SZ provided with three ultrasonic sensors on the side lane;
Fig. 17 is a schematic diagram of comprehensive valid detection of the detection device SZ provided with three ultrasonic sensors on the side lane;
Fig. 18 is an internal structure diagram of an ultrasonic sensor;
Fig. 19 is a schematic arrangement diagram of the detection device and a reflector assembly.

### Detailed Description of the Invention

The present invention will be illustrated more comprehensively below with reference to the attached drawings, which show exemplary embodiments of the present invention. However, the present invention can be embodied in multiple different forms, and should not be interpreted as being limited to the exemplary embodiments described herein. These embodiments are provided for making the present invention comprehensive and integral and completely delivering the scope of the present invention to those of ordinary skill in the art.

In order to facilitate illustration, spatially relative terms such as "upper", "lower", "left" and "right" can be used herein for describing the relation between one element or feature and the other element or feature shown in a figure. It should be understood that the spatial terms are intended to include different directions of a device in use or in operation besides the directions shown in the figure. For example, if the device in the figure is inverted, an element described as "below" other element or feature will be positioned "on" the other element or feature. Thus, the exemplary term "lower" may include upper and lower directions. The device can be positioned in other manner (rotated by 90 degrees or positioned in other direction), and the space herein can be correspondingly understood.

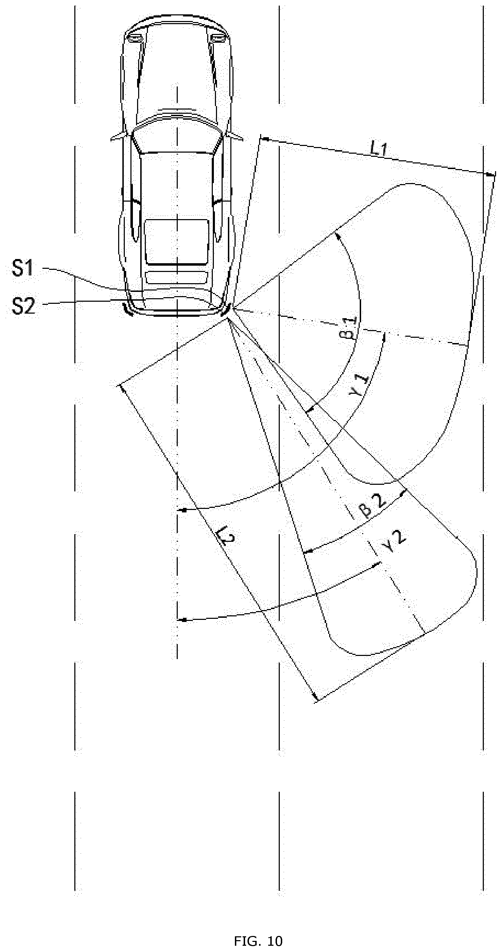

As is shown in Figs. 10 to 17, an automobile ultrasonic blind area detection device for preventing ground misdetection and misinformation in the present invention, includes a plurality of ultrasonic sensors, wherein the detection distances of the ultrasonic sensors vary from each other, and decrease gradually from the far end to the near end of a side lane blind area; each ultrasonic sensor is arranged to form a certain angle with the longitudinal center line of an automobile, with the angle between the distant sensor and the longitudinal center line being relatively small, while the angle between the near-end sensor and the longitudinal center line being relatively large. The long-distance detection signals of far-end ultrasonic sensors are first selected, shielding their ground misdetection signals at the short distance so as to finally extract and combine the useful signals detected by the ultrasonic sensors into far-to-near continuous long-distance detection signals to cover an automobile side lane exterior mirror blind area and a visible area behind the blind area more widely.

Embodiment 1: the detection device of the present invention will be illustrated via an ultrasonic detection device SZ provided with two ultrasonic sensors S1 and S2.

Fig. 10 is a schematic diagram of the original detection of the detection device SZ provided with two ultrasonic sensors on a side lane, wherein the detection distances of the ultrasonic sensors are different, with the near-end short-distance ultrasonic sensor as S1, whose detection distance L1, detection angle β1, and the angle γ1 with the longitudinal center line of the automobile are within 3-4 meters, 70-110 degrees, and 70-90 degrees respectively; and the far-end long-distance ultrasonic sensor is S2, whose detection distance L2, detection angle β2, and the angle γ2 with the longitudinal center line of the automobile are within 4-6 meters, 20-40 degrees, and 20-40 degrees respectively.

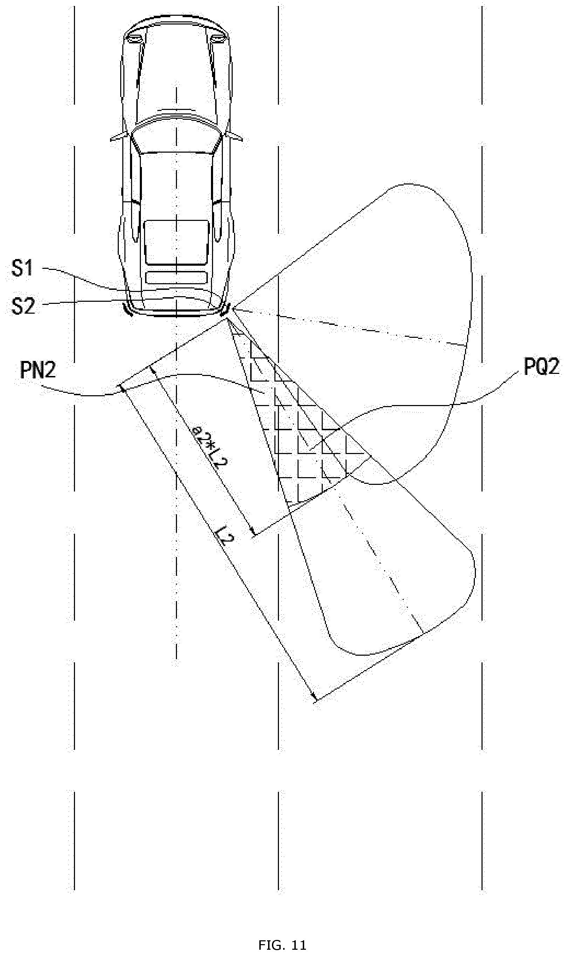

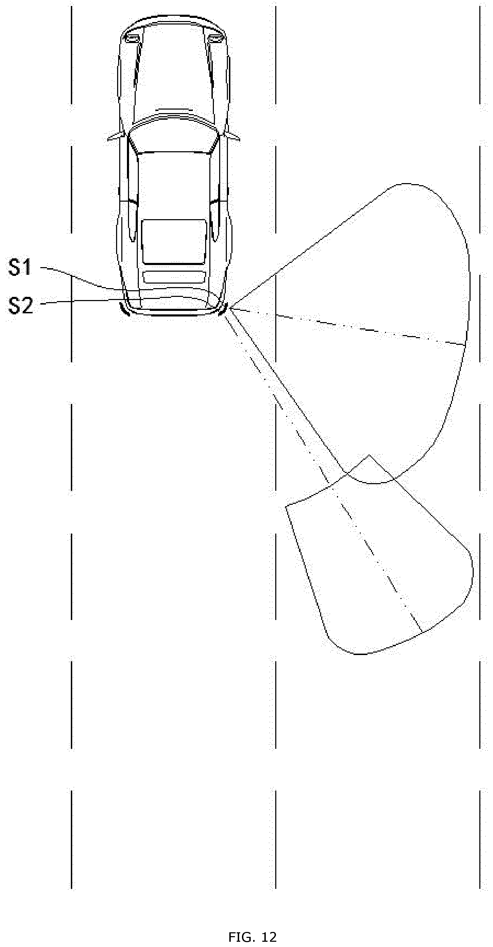

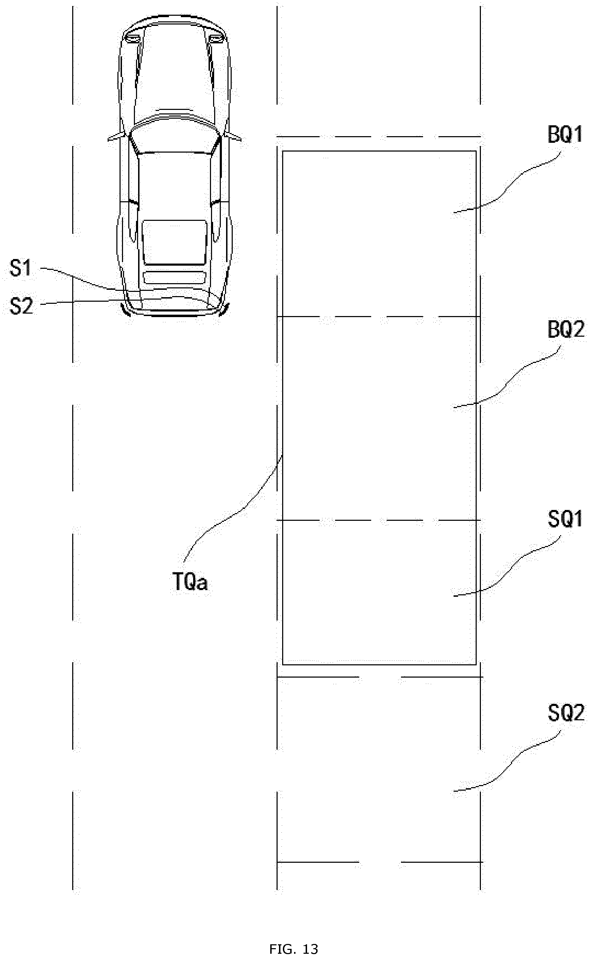

As the detection distance of 3-4 meters for the ultrasonic sensor S1 is short, S1 does not have misdetection or misinformation on the ground in the whole course; and the detection distance of 4-6 meters for the ultrasonic sensor S2 is relatively long, so S2 has ground misdetection and misinformation at the short distance; therefore, the device shields detection signals of the sensor S2 within the short distance from 0 to a2^{∗}L2 (the value of a2^{∗}L2 is about 3 meters), and extracts the useful detection signals within the long distance from a2^{∗}L2 to L2. Referring to Fig. 11, the blind area PQ2 generated at the side lane after the front end of the sensor S2 is shielded is covered by the left rear end of the detection range of the sensor S1, and the front end of the sensor S2 in the shielded area PN2 of the current lane is located in the area that does not need to be detected by the device, and can thus be shielded. Fig. 12 shows a schematic diagram of exploded valid detection of the sensor S1 and the sensor S2; the comprehensive valid detection diagram of Fig. 13 shows a continuous valid strip square detection area TQa, and the detection area TQa can cover the side lane blind areas BQ1 and BQ2 and the visible area SQ1 near the rear end of the blind areas as shown in Fig. 9. Thus, the detection area of the two-sensor device of the present invention is relatively large, covering not only the blind areas but also 1-3 meters behind the blind areas, and not causing misdetection or misinformation on the ground in the whole course. Therefore, the detection performance is good.

Embodiment 2: the detection device of the present invention will be illustrated via an ultrasonic detection device SZ provided with three ultrasonic sensors S1, S2 and S3.

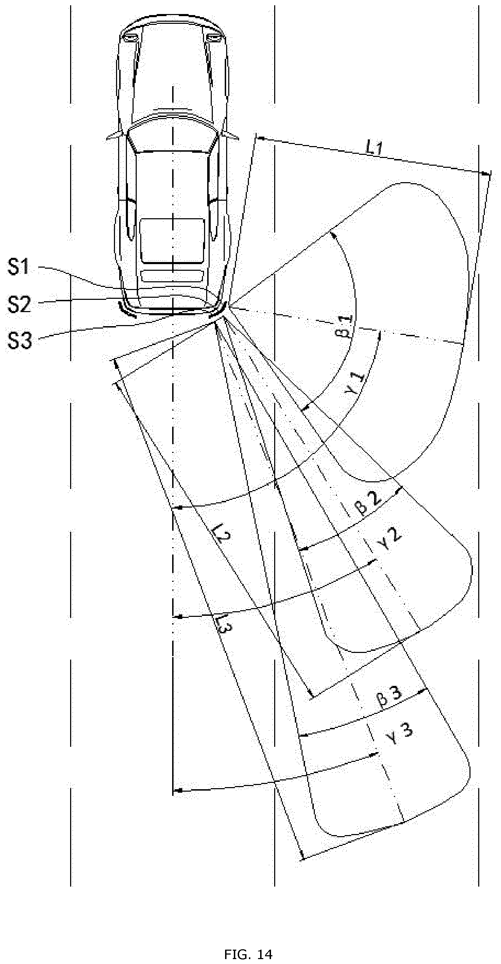

Fig. 14 is a schematic diagram of original detection of the detection device SZ provided with three ultrasonic sensors on a side lane, wherein the detection distances of the ultrasonic sensors are different, with the near-end short-distance ultrasonic sensor as S1, whose detection distance L1, detection angle β1, and angle γ1 with the longitudinal center line of the automobile are within 3-4 meters, 70-110 degrees, and 70-90 degrees respectively; the far-end long-distance ultrasonic sensor is S2, whose detection distance L2, detection angle β2, and the angle γ2 with the longitudinal center line of the automobile are within 4-6 meters, 20-40 degrees, and 20-40 degrees respectively; and the farthest long-distance ultrasonic sensor is S3, whose detection distance L3, the detection angle β3, and the angle γ3 with the longitudinal center line of the automobile are within 7-9 meters, 15-25 degrees, and 15-25 degrees respectively.

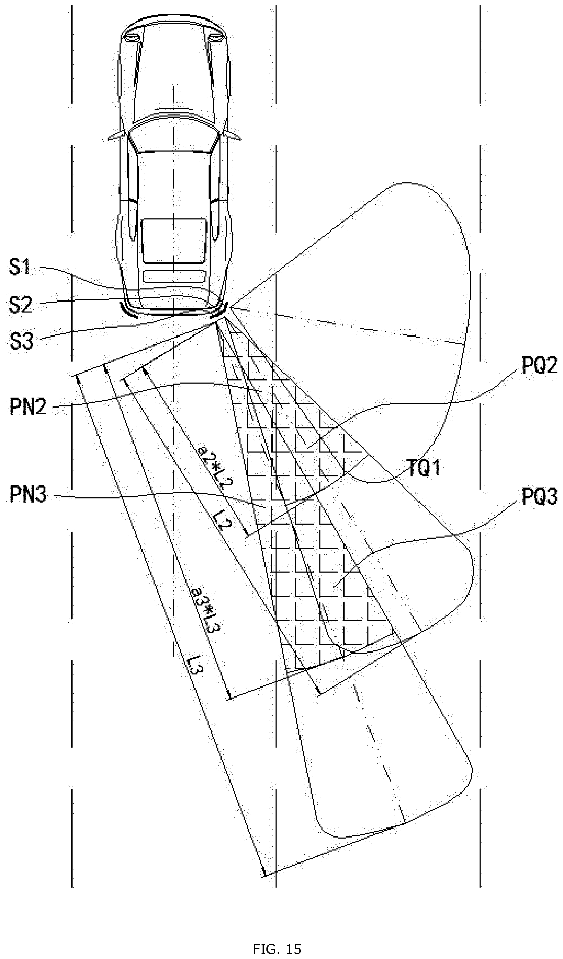

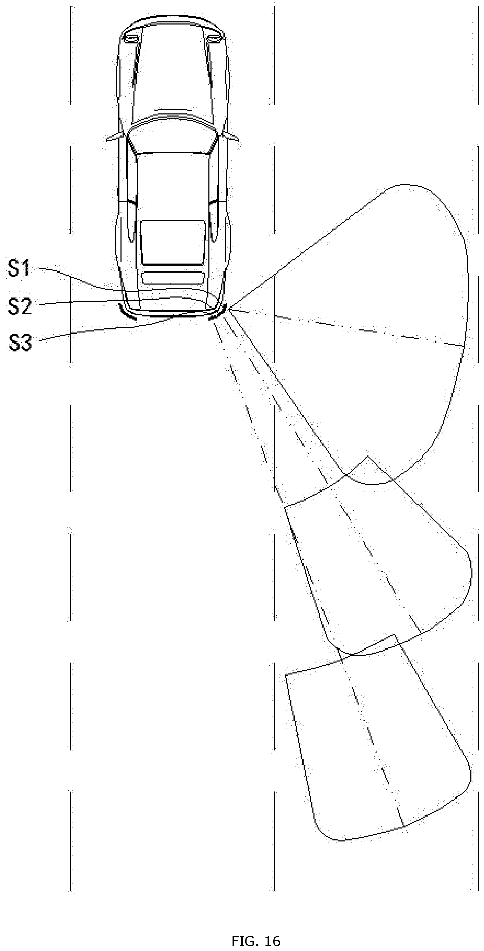

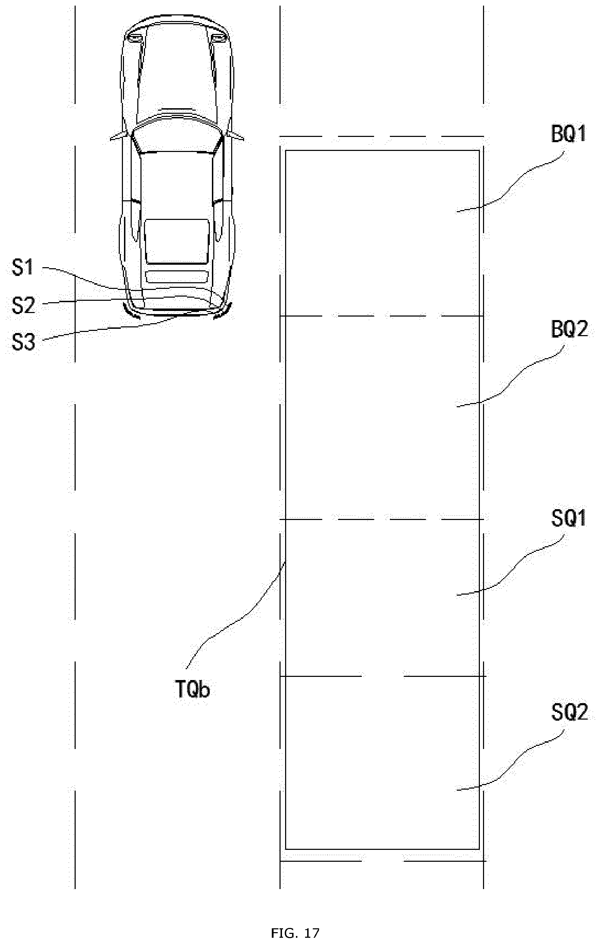

As the detection distance of 3-4 meters for the ultrasonic sensor S1 is short, S1 does not have misdetection or misinformation on the ground in the whole course; the detection distance of 4-6 meters for the ultrasonic sensor S2 is relatively long, and S2 has ground misdetection and misinformation at the short distance; therefore, the device shields detection signals of the sensor S2 within the short distance from 0 to a2^{∗}L2 (the value of a2^{∗}L2 is about 3 meters), and extracts the useful detection signals within the long distance from a2^{∗}L2 to L2. Referring to Fig. 15, the blind area PQ2 generated at the side lane after the front end of the sensor S2 is shielded is covered by the left rear end of the detection range of the sensor S1, and the front end of the sensor S2 in the shielded area PN2 of the current lane is located in the area that does not need to be detected by the device, and can thus be shielded. The detection distance of 7-9 meters for the ultrasonic sensor S3 is relatively long, and S3 has ground misdetection and misinformation at the short distance; therefore, the device shields detection signals of the sensor S3 within the short distance from 0 to a3^{∗}L3 (the value of a3^{∗}L3 is about 5 meters), and extracts the useful detection signals within the long distance from a3^{∗}L3 to L3. Referring to Fig. 15, the blind area PQ3 generated at the side lane after the front end of the sensor S3 is shielded is covered by the left rear end of the detection range of the sensor S2, and the front end of the sensor S3 in the shielded area PN3 of the current lane is located in the area that does not need to be detected by the device, and can thus be shielded. Fig. 16 shows a schematic diagram of exploded valid detection of the sensor S1, the sensor S2 and the sensor S3; the comprehensive valid detection diagram of Fig. 17 shows a continuous valid strip square detection area TQb, and the detection area TQb can cover the side lane blind areas BQ1 and BQ2, the visible area SQ1 near the rear end of the blind areas and the further visible area SQ2 as shown in Fig. 9. Thus, the detection area of the three-sensor device of the present invention is further enlarged in range, covering not only the blind areas but also 4-6 meters behind the blind areas, and not causing misdetection or misinformation on the ground in the whole course, further strengthening the long-distance detection capability of the device. The further strengthened long-distance detection capability of the device means the blind spot monitoring system can detect and warn vehicles running in the side lane earlier, thus further improving the lane-changing safety of the automobile.

The existing automobile ultrasonic blind spot monitoring system is usually designed with a relatively small detection distance behind the rear end of a side lane, a distance no greater than 4 meters behind the rear end of the rear bumper of the automobile. The two-sensor detection device of the present invention can raise the distance to 4-6 meters, and the three-sensor detection device of the present invention to 7-9 meters, so the promotion effect is significant. If the number of the sensors is further increased, the detection distance will be raised further.

The ultrasonic blind area detection device of the present invention can be provided with a plurality of ultrasonic sensors in line with operational requirement, and the plurality of ultrasonic sensors are combined into an integral structure or of independently separate structures.

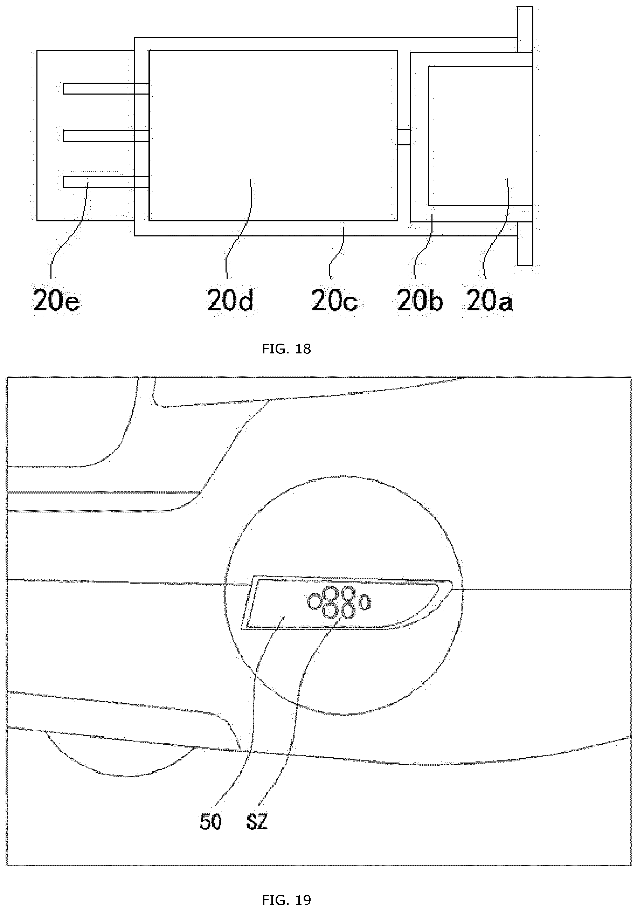

Fig. 18 is an internal structure diagram of a single ultrasonic sensor. The single ultrasonic sensor includes a microphone 20a, a gum cover unit 20b, an electronic circuit unit 20d, a connector unit 20e and a housing assembly unit 20c.

The electronic circuit unit 20d drives the microphone 20a and amplifies, filters and operates echo signals to obtain a detection distance. A singlechip, a power module, a communication module, an ultrasonic transmitting module and an ultrasonic receiving module are integrated in the electronic circuit unit 20d. A group of ultrasonic transmitting module and ultrasonic receiving module corresponds to one microphone to control the operation thereof.

The gum cover unit 20b provides protection and shock absorption effects for the microphone 20a. The connector unit 20e realizes the connection functions with hardware such as sensor power supply, data transmission and the like, and provides overall installation support and protection for the sensor together with the housing assembly unit 20c. All the units are assembled as a whole to form the ultrasonic sensor, and the sensor is usually filled with filling gum to realize waterproof and shock-proof functions (some sensors are directly structurally sealed by using the housing assembly to realize the waterproof function, rather than being encapsulated with the filling gum).

The above explanations on the composing of the device are based on the face that all the ultrasonic sensors are of separately independent structures, meaning each ultrasonic sensor is an individual one. When the ultrasonic sensors are combined into an integral structure, the sensors can be in a simple mechanism setting combination, for instance, each sensor still has an electronic circuit unit, a connector unit and the like which are independent; and the sensors can also be in a complex setting combination for instance, the sensors share an electronic circuit unit, a connector unit and the like. The detection device is flexible in deciding the combination setting manner of the sensors. When the plurality of ultrasonic sensors are combined into an integral structure, the overall detection device can also be referred to an ultrasonic sensor. Whether ultrasonic sensors of the blind area detection device of the present invention are combined into an integral structure or are of independently separate structures is dependent on the perspectives of making them well arranged and applied in the automobile so as to improve the functional and performance or achieve the better-looking effect.

Moreover, in specific designs, the ultrasonic sensors (microphones) in the detection device of the present invention can be set with different working frequencies (e.g., 40KHz, 48KHz or others), so that they can work simultaneously to detect obstacles; the ultrasonic sensors can also be set with the same working frequency. Under this situation, the sensors work alternately and circularly For instance, not until one ultrasonic sensor completes the detection does another ultrasonic sensor begin the detection. In this way, same frequency interference can be removed.

Therefore, when the ultrasonic blind area detection device SZ in the present invention is applied to an automobile blind spot monitoring system, it can prevent misdetection and misinformation on the ground, and can effectively improve the long-distance detection capability of the system. With the device, it is possible to appropriately cover the automobile side lane blind area and the area behind the blind area more widely, and to effectively ensure the detection performance of the blind spot monitoring system. Moreover, when the automobile is provided with automatic parking and reversing radar systems at the same time, the ultrasonic sensor S1 in the detection device can be used as an APA ultrasonic sensor 18, and the ultrasonic sensors S2 and S3 in the detection device can be used as corner RPA ultrasonic sensors 13 for corner short-distance detection during reversing, reducing the number of the ultrasonic sensors and the cost of the overall ultrasonic system. Therefore, it is a preferred solution to apply the detection device SZ of the present invention to an automobile ultrasonic blind spot monitoring system.

A long-distance automobile ultrasonic blind area detection method for preventing ground misdetection and misinformation in the present invention is specifically: a plurality of ultrasonic sensors are divided into gradually decreasing levels according to the detection distance from the far end to the near end of a side lane blind area, wherein in a side lane, the ground misdetection and misinformation distance generated by one ultrasonic sensor is not greater than the actual detection distance of the next-level ultrasonic sensor; the plurality of ultrasonic sensors work cooperatively, the shielding signal of the last-level sensor is covered by the detection signal of the next-level ultrasonic sensor, and the useful signals detected by all the ultrasonic sensors are finally extracted and combined into far-to-near continuous long-distance detection signals.

The near-end ultrasonic sensor with the lowest level at the nearest end does not produce a misdetection and misinformation signal on the ground.

As is mentioned in the above ultrasonic blind area detection device, the ultrasonic blind area detection method of the present invention can be illustrated via the arrangement of two ultrasonic sensors or three ultrasonic sensors.

In the ultrasonic blind area detection method, two ultrasonic sensors are adopted, a near-end ultrasonic sensor S1 and a far-end ultrasonic sensor S2. Both the sensors S1 and S2 simultaneously detect the side lane blind area and the rear end of the blind area. The near-end ultrasonic sensor S1 does not produce a misdetection and misinformation signal on the ground.

In the ultrasonic blind area detection method, three ultrasonic sensors are adopted, a near-end ultrasonic sensor S1, a far-end ultrasonic sensor S2 and another far-end ultrasonic sensor S3. All the sensors S1, S2 and S3 simultaneously detect the side lane blind area and the rear end of the blind area. The near-end ultrasonic sensor S1 does not produce a misdetection and misinformation signal on the ground.

The detection distance of the near-end ultrasonic sensor S1 is relatively short, and the angle with the longitudinal center line of the automobile is relatively large; the detection distance of the far-end ultrasonic sensor S2 is relatively long, and the angle with the longitudinal center line of the automobile is relatively small; the detection distance of the far-end ultrasonic sensor S3 is the furthest, and the angle with the longitudinal center line of the automobile is the smallest. Through the selecting of the long-distance detection signals of the far-end ultrasonic sensors, the ground misdetection signals of the sensors at the short distance are shielded, and the useful signals detected by the ultrasonic sensors are finally extracted and combined into far-to-near continuous long-distance detection signals covering the side lane blind area and the rear end of the blind area.

The ultrasonic blind area detection device SZ is arranged to be integral with an automobile reflector 50. Fig. 19 is a schematic arrangement diagram of the detection device SZ and the reflector assembly, which shows an installation structure form of the ultrasonic blind area detection device SZ of the present invention, i.e., when the plurality of ultrasonic sensors of the ultrasonic blind area detection device SZ of the present invention are combined into an integral structure, the ultrasonic detection device SZ is arranged to be integral with the automobile reflector 50 into an assembly, and then the assembly is fixed on an automobile bumper.

The setting form has the following advantages:
1. The integration of each ultrasonic sensor in the ultrasonic detection device SZ with the reflector makes the sensors less visible, so that the overall rear appearance of the automobile becomes better looking. If two or more ultrasonic sensors are directly installed on the bumper, the plurality of ultrasonic sensors look too prominent on the bumper and are not so elegant.
2. Through the adjustment of the shape and structure of the assembly itself as well as the position and angle of the assembly on the bumper, better arrangement direction and angle of each ultrasonic sensor of the detection device are easily selected and obtained on the automobile to obtain better detection performance. The direct arrangement of the ultrasonic sensors on the bumper lacks such adjustment flexibility.
3. Automobile bumpers are diverse in color, and the integration of the ultrasonic sensors with the reflector can greatly reduce the color category of paint sprayed to the appearance of the sensors. All that one needs is only one or two colors that is or are matched with the reflector. However, if the ultrasonic sensors are directly mounted on the bumper, multiple colors of paints are needed in order to keep the appearances of the ultrasonic sensors in line with the color of the body, making the machining troublesome and the cost high.

Meanwhile, besides their use in common automobiles, the automobile ultrasonic detection method and the sensor of the present invention also find applications to various types of vehicles having different sizes, such as tricycles, motorcycles, vehicles for the disabled, electric bicycles, etc. Any use of the automobile ultrasonic detection method and the sensor of the present invention falls into the scope of the present invention.

The present invention has the following advantages:
At present, the ultrasonic detection device is becoming increasingly popular, and the ultrasonic reversing radar has become a standard configuration of automobiles; as ultrasonic sensors are used for detection of an automatic parking system and a blind spot monitoring system, the application and demand of the high-performance ultrasonic detection device (sensor) are on constant rise. In addition, the ultrasonic detection device will be applied to automobiles more widely to assist the automobiles in realizing more automatic, more intelligent and safer driving. The detection distance of the traditional automobile ultrasonic sensor at present is relatively short, so it is hardly used for automobile blind area monitoring or automobile lane-changing auxiliary detection. Thus, a microwave (millimeter wave) radar sensor is applied to some vehicles as a detection device. However, the cost of the microwave radar sensor is relatively high. Therefore, the development and application of the ultrasonic detection device with strong long-distance detection performance is of great significance.

The solution of the present invention can be applied to automobiles with extremely wide prospect, and it will play an important role in promoting and accelerating the popularization and application of the detection device and the detection method of the present invention, bringing in considerable economic value, further improving the driving safety of the automobiles.

## Claims

1. An automobile ultrasonic blind area detection device for preventing ground misdetection and misinformation, comprising a plurality of ultrasonic sensors, wherein, each ultrasonic sensor is arranged to form a certain angle with the longitudinal center line of an automobile, and the detection directions of the ultrasonic sensors are spaced by set angles to respectively correspond to different directions of a side lane blind area from the far end to the near end; the detection distances of the ultrasonic sensors are different, and decrease gradually from the far end to the near end of the side lane blind area; through the shielding of the ground misdetection signals of the ultrasonic sensors, the useful signals detected by the ultrasonic sensors are extracted and combined into far-near continuous long-distance detection signals to cover an automobile side lane exterior mirror blind area and a visible area behind the blind area more widely.

2. The ultrasonic blind area detection device according to claim 1, wherein, the angle between the ultrasonic sensor corresponding to the far end and the longitudinal center line of the automobile is relatively small, and the angle between the ultrasonic sensor corresponding to the near end and the longitudinal center line of the automobile is relatively large.

3. The ultrasonic blind area detection device according to claim 1, wherein, the plurality of ultrasonic sensors are combined into an integral structure or of independently separate structures.

4. The ultrasonic blind area detection device according to claim 1, wherein, each ultrasonic sensor comprises a microphone and an electronic circuit unit, and the electronic circuit unit drives the microphone and amplifies, filters and operates echo signals to obtain a detection distance.

5. The ultrasonic blind area detection device according to claim 1, wherein, the ultrasonic sensor further includes a housing assembly unit and a gum cover unit installed in the housing assembly unit, and a connector unit is arranged on the housing assembly unit.

6. The ultrasonic blind area detection device according to claim 5, wherein, the microphone is fixedly arranged in the housing assembly unit via the gum cover unit, the connector unit is an external hardware interface of the sensor, and the sensor transmits signals to the outside via the connector unit.

7. The ultrasonic blind area detection device according to claim 1, wherein, when the plurality of ultrasonic sensors are combined into an integral structure, and the ultrasonic blind area detection device is arranged to be integral with an automobile reflector.

8. An automobile ultrasonic blind area detection method for preventing ground misdetection and misinformation, wherein, the ultrasonic blind area detection method is technically: a plurality of ultrasonic sensors are divided into gradually decreasing levels according to the detection distance, wherein, the detection directions of the ultrasonic sensors are different; in a side lane blind area, the ground misdetection and misinformation distance generated by one ultrasonic sensor is not greater than the actual detection distance of the next-level ultrasonic sensor; the plurality of ultrasonic sensors work cooperatively, the shielding signal of the last-level sensor is replaced by the detection signal of the next-level ultrasonic sensor, and the useful signals detected by all the ultrasonic sensors are finally extracted and combined into far-near continuous long-distance detection signals.

9. The ultrasonic blind area detection method according to claim 8, wherein, the plurality of ultrasonic sensors are divided into gradually decreasing levels from the far end to the near end of the side lane blind area, and the near-end ultrasonic sensor with the lowest level at the nearest end does not produce a misdetection and misinformation signal on the ground.

10. The ultrasonic blind area detection method according to claim 8, wherein, the plurality of ultrasonic sensors are combined into an integral structure or of independently separated structures.
